# EUROPEAN PATENT SPECIFICATION

(11) **EP 4 368 999 B1**
(45) Date of publication and mention of the grant of the patent: **16.09.2026**
(21) Application number: 22835554.1
(22) Date of filing: 02.06.2022
(51) Int. Cl.: G01N 35/04, G01N 1/28, G01N 1/31, G01N 35/00

(54) **SLIDE SUPPLY AND STORAGE UNIT, AND SPECIMEN PROCESSING SYSTEM**
OBJEKTTRÄGERZUFUHR- UND -SPEICHEREINHEIT UND PROBENVERARBEITUNGSSYSTEM
UNITÉ DE DISTRIBUTION ET DE STOCKAGE DE LAMES ET SYSTÈME DE TRAITEMENT D'ÉCHANTILLONS

(30) Priority: 05.07.2021 JP 2021111417
(43) Date of publication of application: 15.05.2024
(73) Proprietor: HITACHI HIGH-TECH CORPORATION, Tokyo 105-6409 (JP)
(72) Inventor: ENDO, Masashi, Tokyo 105-6409 (JP); MATSUBARA, Shigeki, Tokyo 105-6409 (JP); SUGIYAMA, Hidetoshi, Tokyo 105-6409 (JP)
(74) Representative: Strehl & Partner mbB
(86) International application number: PCT/JP2022/022545
(87) International publication number: WO 2023/281949

(56) References cited:
- CN-A- 112 414 825
- CN-A- 112 414 825
- JP-A- 2005 010 006
- JP-A- 2007 147 399
- JP-A- 2008 528 967
- JP-A- 2012 013 953
- JP-A- 2012 141 287
- JP-A- 2012 177 803
- JP-A- 2018 017 693
- JP-A- S62 118 257
- US-A1- 2009 087 904
- US-A1- 2012 075 695
- US-A1- 2012 218 400

## Description

### Technical Field

The present invention relates to a glass slide supply storage unit and a sample processing system and, particularly relates to a glass slide supply storage unit capable of mounting a plurality of slide trays on each of which a plurality of glass slides are placed and a sample processing system including the glass slide supply storage unit.

### Background Art

In a pathological examination, a biological sample such as tissue or blood is processed, the processed biological sample is placed on a glass slide, the biological sample on the glass slide is stained, and the stained biological sample is observed with a microscope to examine the biological sample.

Recently, automation is promoted in a process of staining a biological sample, a process of coverslipping the stained glass slide, a process of acquiring a digital image of the stained biological sample, and the like. It is required to automate all the processes without any manual intervention.

As a system for automating all the processes, PTL 1 proposes an automated system that is implemented by combining plural types of functional units.

PTL 2 discloses a configuration in which a plurality of holders on each of which a plurality of glass slides are placed are arranged to overlap each other at a predetermined preparation position, the holders are transported to an imaging position one by one by a holder transport device, and an image of the entire holder, a macroscopic image of a single glass slide, and a microscopic image of a single glass slide are automatically acquired.

PTL 3 discloses a configuration in which a glass slide can be taken out and handled from a storage portion on which a plurality of glass slides are placed such that the glass slide can be positioned.

Further prior art is disclosed in the documents US 2012/218400 A1 (KURATA TSUTOMU et al.), US 2009/087904 A1 (HEID HANS L et al.), and CN 112 414 825 A (SHENZHEN BEIANTE MEDICAL TECH CO LTD).

US 2012/218400 A1 is considered the closest prior art, disclosing a microscopic image pickup apparatus with slide holder pickup section and transportation means. However, this prior art does not disclose the specific features of the moving mechanism's operation range and the reading operation performed during movement of the slide trays.

### Citation List

### Patent Literature

PTL 1: JP2012-141287A
PTL 2: JP2012-177803A
PTL 3: JP04871263B

### Summary of Invention

### Technical Problem

For the automation of pathological examination, it is necessary to handle glass slides.

In the automated system disclosed in PTL 1, for efficient automation, means for determining a process necessary for each of glass slides and determining a unit to which each of the glass slides is transported is necessary.

PTL 1 discloses units having functions configuring the automated system. However, specifically, PTL 1 does not disclose a method of handling glass slides to transport the glass slides between the functional units.

PTL 1 discloses means for executing a designated procedure by assigning an identifier to a glass slide and allowing the automated system to read the identifier. However, PTL 1 does not disclose information required for efficient automation, for example, a timing and a location where the identifier is read.

In PTL 2, to take out a desired holder from the plurality of holders arranged to overlap each other, it is necessary that a holder placed above any holder is moved from the preparation position to the imaging position and is further transported to a waiting position. That is, when a plurality of holders are placed above the desired holder to overlap each other, all the holders need to be transported one by one. Therefore, a very long period of time is required for the work of transporting the desired holder.

In PTL 3, a glass slide needs to be taken out while a glass slide transport unit is stopped at a position of each of a plurality of glass slides. Therefore, an operating range of the glass slide transport unit needs to be widened, and the glass slide transport unit needs to be stopped at the position of each of the plurality of glass slides with high accuracy.

A main object of the present application is to provide, with a relatively simple configuration, a glass slide supply storage unit capable of simultaneously mounting a plurality of slide trays on each of which a plurality of glass slides are placed and freely transporting a desired glass slide.

Other objects and new characteristics will be clarified with reference to description of the specification and the accompanying drawings.

### Solution to Problem

The invention proposes to solve the above problems by providing a glass slide supply storage unit with the features of claim 1 and a sample processing system including such a glass slide supply storage unit.

### Advantageous Effects of Invention

According to one embodiment, it is possible to provide a glass slide supply storage unit capable of simultaneously mounting a plurality of slide trays on each of which a plurality of glass slides are placed and freely transporting a desired glass slide.

### Brief Description of Drawings

[Fig. 1] Fig. 1 is a plan view illustrating the summary of a sample processing system according to a first embodiment.
[Fig. 2] Fig. 2 is a side view illustrating the summary of the sample processing system according to the first embodiment.
[Fig. 3] Fig. 3 is a perspective view illustrating a glass slide supply storage unit according to the first embodiment.
[Fig. 4] Fig. 4 is a plan view illustrating a transport process of a glass slide in the first embodiment.
[Fig. 5] Fig. 5 is a side view illustrating the transport process of the glass slide in the first embodiment.
[Fig. 6] Fig. 6 is a flowchart illustrating the transport process of the glass slide in the first embodiment.
[Fig. 7] Fig. 7 is a schematic diagram illustrating one example of a moving mechanism according to the first embodiment.
[Fig. 8] Fig. 8 is a side view illustrating another example of the moving mechanism according to the first embodiment.
[Fig. 9] Fig. 9 is a side view illustrating another example of the moving mechanism according to the first embodiment.
[Fig. 10] Fig. 10 is a plan view illustrating the summary of a sample processing system according to a second embodiment.
[Fig. 11] Fig. 11 is a perspective view illustrating a glass slide supply storage unit according to a third embodiment.
[Fig. 12A] Fig. 12A is a side view illustrating a transport process of a slide tray in the third embodiment.
[Fig. 12B] Fig. 12B is a side view illustrating the transport process following Fig. 12A.
[Fig. 12C] Fig. 12C is a side view illustrating the transport process following Fig. 12B.
[Fig. 12D] Fig. 12D is a side view illustrating the transport process following Fig. 12C.
[Fig. 12E] Fig. 12E is a side view illustrating the transport process following Fig. 12D.
[Fig. 12F] Fig. 12F is a side view illustrating the transport process following Fig. 12E.
[Fig. 12G] Fig. 12G is a side view illustrating the transport process following Fig. 12F.
[Fig. 12H] Fig. 12H is a side view illustrating the transport process following Fig. 12G.
[Fig. 12I] Fig. 12I is a side view illustrating the transport process following Fig. 12H.
[Fig. 12J] Fig. 12J is a side view illustrating the transport process following Fig. 12I.
[Fig. 12K] Fig. 12K is a side view illustrating the transport process following Fig. 12J.

### Description of Embodiments

Hereinafter, embodiments will be described in detail based on the drawings. In all the diagrams for describing the embodiments, members having the same functions are represented by the same reference numerals, and the description thereof will not be repeated. In the following embodiments, basically, the description of the same or identical portions will not be repeated.

In the drawings for describing the embodiments, to easily understand each of configurations, hatching may be omitted.

An X direction, a Y direction, and a Z direction described in the present application intersect each other and are orthogonal to each other. The present application will be described assuming that an X1 direction among X directions is a right direction, an X2 direction among the X directions is a left direction, a Y1 direction among Y directions is a front direction, a Y2 direction among the Y directions is a rear direction, a Z1 direction among Z directions is an upward direction, and a Z2 direction among the Z directions is a downward direction.

### (First Embodiment)

### <Configuration of Sample Processing System>

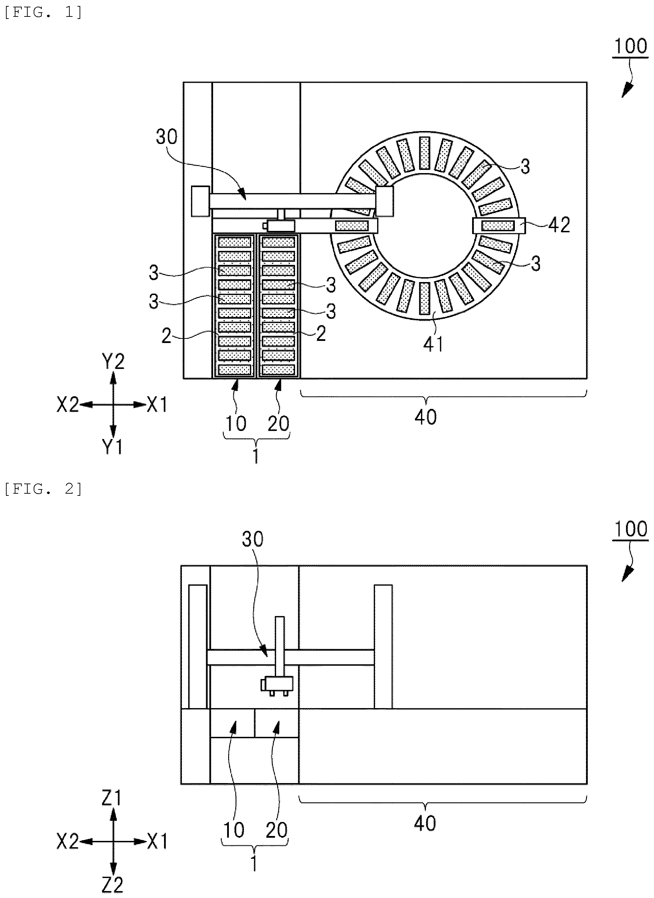

Hereinafter, a sample processing system 100 according to a first embodiment will be described using Figs. 1 and 2.

As illustrated in Figs. 1 and 2, the sample processing system 100 includes a glass slide supply storage unit 1, a transport unit 30, and a staining unit 40.

The glass slide supply storage unit 1 includes a supply portion 10 and a storage portion 20, and a plurality of slide trays 2 are mountable on each of the supply portion 10 and the storage portion 20. A plurality of glass slides 3 on each of which a sample is placed are placeable on each of the plurality of slide trays 2. Note that the sample described herein is, for example, a biological sample such as tissue or blood used in pathological examination.

The transport unit 30 is attached to the glass slide supply storage unit 1, and is provided to transport the glass slides 3. For example, the glass slides 3 placed on the slide tray 2 can be transported from the glass slide supply storage unit 1 to another unit such as the staining unit 40 by the transport unit 30.

The staining unit 40 includes a disk 41 and a reagent supply portion 42, and is provided to stain the sample placed on the glass slide 3. The glass slide 3 transported by the transport unit 30 is placed on the disk 41, and the sample placed on the glass slide 3 is stained with a reagent supplied from the reagent supply portion 42. As a staining method used in the staining unit 40, for example, HE staining, immunohistochemical staining, or in-situ hybridization staining can be applied.

### <Configuration of Glass Slide Supply Storage Unit 1>

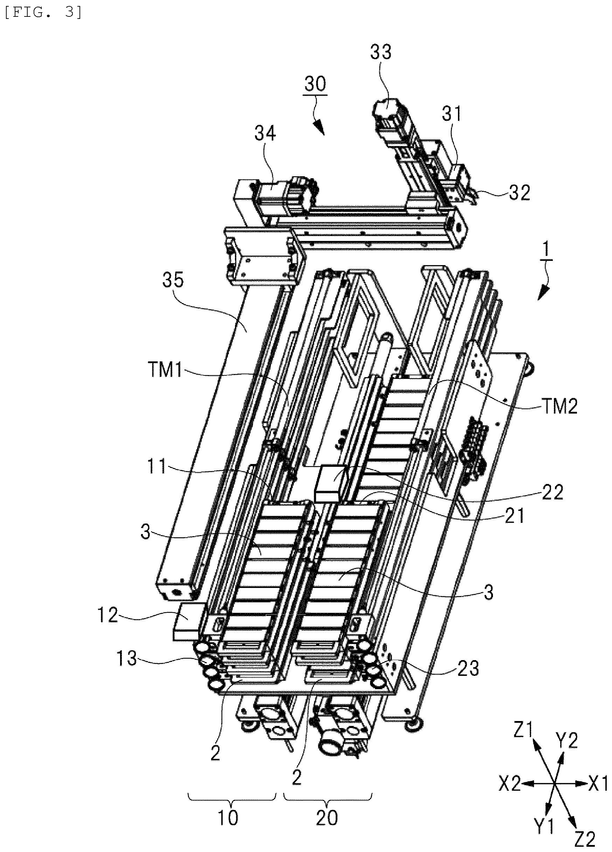

Hereinafter, the glass slide supply storage unit 1 according to the first embodiment will be described using Fig. 3.

The supply portion 10 and the storage portion 20 are adjacent to each other in the X direction and are integrated. The plurality of glass slides 3 are placed on the slide tray 2 to be adjacent to each other in the Y direction.

The plurality of slide trays 2 are mountable on the supply portion 10 such that the plurality of slide trays 2 are stacked in the vertical direction (Z direction). The supply portion 10 includes a plurality of installation portions 11, an identification code reader 12, and a plurality of opening and closing switches 13.

The plurality of installation portions 11 are stacked in the Z direction, and the slide tray 2 is placeable on each of the plurality of installation portions 11. In the first embodiment, when one slide tray 2 is mounted on the supply portion 10, the one slide tray 2 is placed on one installation portion 11.

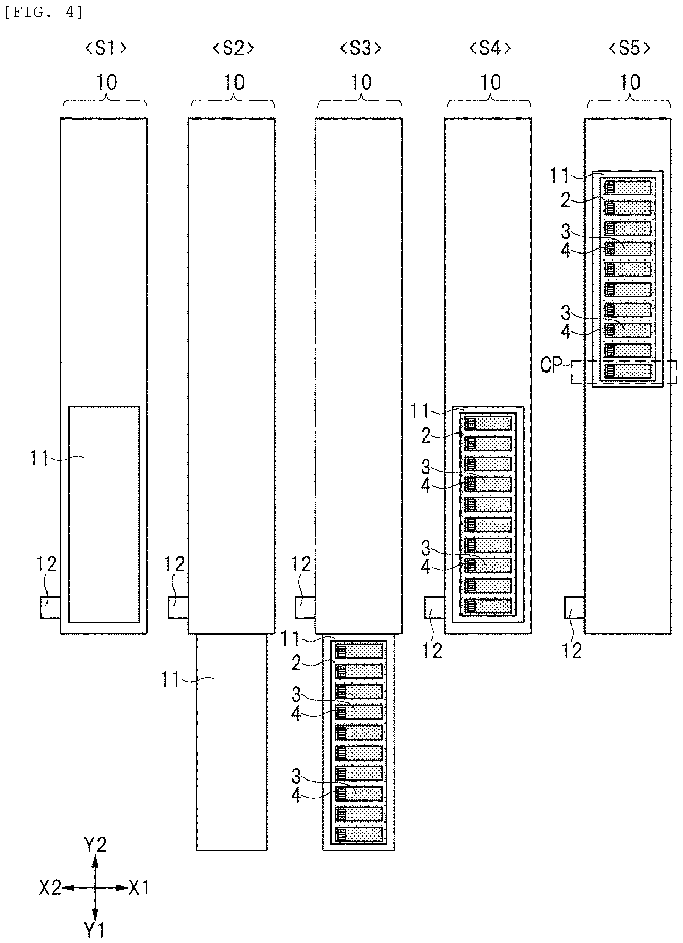

As illustrated in Fig. 4, an identification code 4 is provided in each of the plurality of glass slides 3. The identification code reader 12 can read information in the identification code 4 of each of the plurality of glass slides 3. The identification code reader 12 is provided on the outside (Y1 direction side) of the glass slide supply storage unit 1 in the supply portion 10, and is movable in the Z direction by a moving mechanism (not illustrated). Therefore, for example, when the slide tray 2 is introduced from the outside of the glass slide supply storage unit 1 to a predetermined layer of the supply portion 10, the identification code reader 12 moves to the predetermined layer such that information regarding the plurality of glass slides 3 placed on the introduced slide tray 2 can be read.

As the identification code 4, for example, a barcode, a two-dimensional code, or an RFID can be applied, but the identification code 4 is not limited thereto. An identifier having another form may be adopted as long as the identifier can store the information regarding the glass slide 3.

The opening and closing switches 13 are provided on the front side (Y1 direction side) of the supply portion 10, and are provided at positions corresponding to respective layers of the plurality of slide trays 2 in the supply portion 10. When an operator presses the opening and closing switch 13 of a predetermined layer, an operation of moving the installation portion 11 to the outside of the glass slide supply storage unit 1 or an operation of moving the installation portion 11 to the inside of the glass slide supply storage unit 1 is executed.

The plurality of slide trays 2 are mountable on the storage portion 20 such that the plurality of slide trays 2 are stacked in the vertical direction (Z direction). The storage portion 20 includes a plurality of installation portions 21, an identification code reader 22, and a plurality of opening and closing switches 23.

The plurality of installation portions 21 are stacked in the Z direction, and the slide tray 2 is placeable on each of the plurality of installation portions 21. In the first embodiment, when one slide tray 2 is mounted on the storage portion 20, the one slide tray 2 is placed on one installation portion 21.

The identification code reader 22 can read information in the identification code 4 of each of the plurality of glass slides 3. The identification code reader 22 is provided on the inside (Y2 direction side) of the glass slide supply storage unit 1 in the storage portion 20, and is movable in the Z direction by a moving mechanism (not illustrated). Therefore, for example, when the slide tray 2 transported by a moving mechanism TM2 described below is introduced into a predetermined layer of the storage portion 20, the identification code reader 12 moves to the predetermined layer such that information regarding the plurality of glass slides 3 placed on the introduced slide tray 2 can be read.

The opening and closing switches 23 are provided on the front side (Y1 direction side) of the storage portion 20, and are provided at positions corresponding to respective layers of the plurality of slide trays 2 in the storage portion 20. By pressing the opening and closing switch 23 of a predetermined layer, an operation of moving the installation portion 21 to the outside of the glass slide supply storage unit 1 or an operation of moving the installation portion 21 to the inside of the glass slide supply storage unit 1 is executed.

The glass slide supply storage unit 1 further includes a moving mechanism TM1 configured to individually move the plurality of slide trays 2 mounted on the supply portion 10 in the Y direction and the moving mechanism TM2 configured to individually move the plurality of slide trays 2 mounted on the storage portion 20 in the Y direction. In the first embodiment, the plurality of installation portions 11 (installation portions 21) on each of which the slide tray 2 is placed are individually moved in the Y direction by the moving mechanism TM1 (moving mechanism TM2) such that the plurality of slide trays 2 are moved.

The moving mechanism TM1 moves the plurality of slide trays 2 from an initial position that is a position where the plurality of slide trays 2 are mounted on the supply portion 10 in the Y direction (a direction toward the outside of the glass slide supply storage unit 1 or in a direction from the initial position toward the inside of the glass slide supply storage unit 1). The moving mechanism TM1 is movable in a range corresponding to the width of at least one slide tray 2. A moving direction and a moving range of the moving mechanism TM2 are the same as those of the moving mechanism TM1.

A specific configuration example of the moving mechanisms TM1 and TM2 will be described below in detail.

### <Configuration of Transport Unit 30>

Hereinafter, the transport unit 30 according to the first embodiment will be described using Fig. 3.

The transport unit 30 includes a gripper mechanism 31, a Z transport axis 33, an X transport axis 34, and a Y transport axis 35. The gripper mechanism 31 includes a gripper portion 32 configured to grip the glass slide 3. The Z transport axis 33 is provided to move a position of the gripper mechanism 31 in the Z direction, the X transport axis 34 is provided to move a position of the gripper mechanism 31 in the X direction, and the Y transport axis 35 is provided to move a position of the gripper mechanism 31 in the Y direction.

The gripper mechanism 31 is moved to a predetermined position by the Z transport axis 33, the X transport axis 34, and the Y transport axis 35 and allows the gripper portion 32 to execute an opening and closing operation such that the glass slide 3 can be gripped and released.

The gripper portion 32 may be in an aspect of pinching the glass slide 3. However, other gripping aspects may be adopted such as an aspect where the glass slide 3 is adsorbed and gripped by a member such as a sucker.

### <Transport Process of Glass Slide 3>

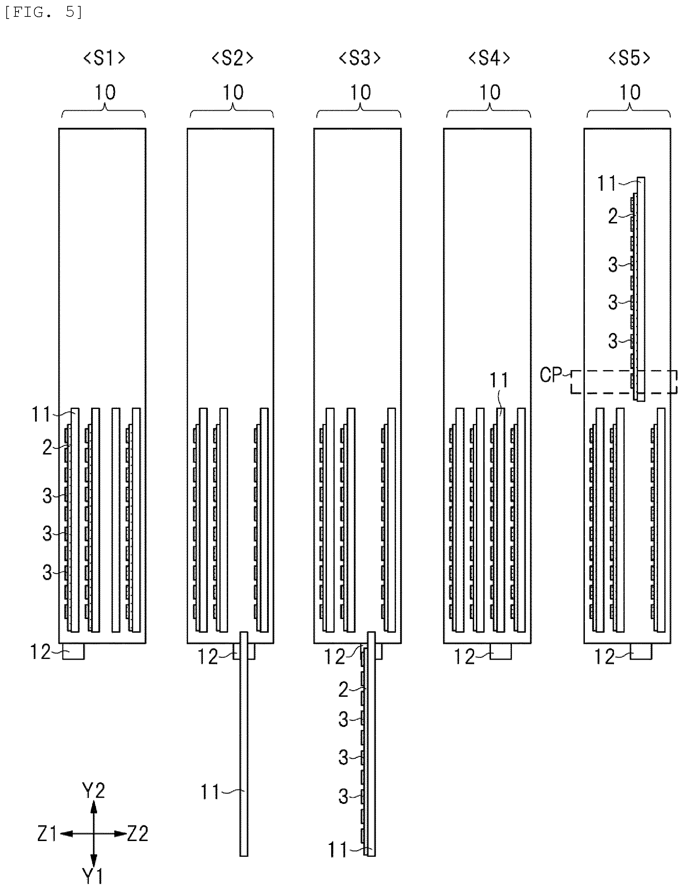

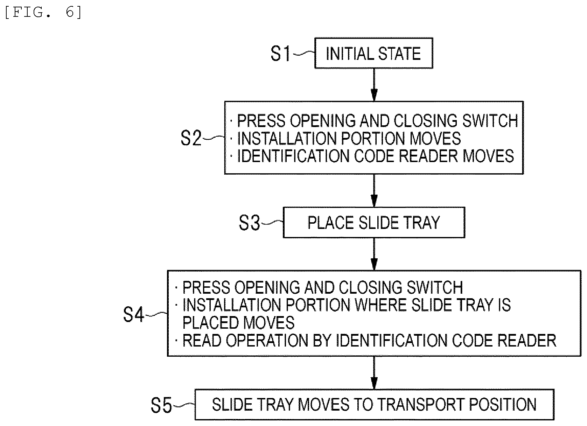

Hereinafter, a transport process of the glass slide 3 according to the first embodiment will be described using Figs. 4 to 6. Fig. 5 is a side view corresponding to Fig. 4, and reference numerals S1 to S5 illustrated in Figs. 4 and 5 correspond to steps S1 to S5 illustrated in a flowchart of Fig. 6.

Step S1 illustrates an initial state before introducing the slide tray 2 into the supply portion 10. An empty installation portion 11 on which the slide tray 2 is not placed is mounted on the initial position that is the position where the plurality of slide trays 2 are mounted on the supply portion 10.

In Step S2, when the operator presses a predetermined opening and closing switch 13 among the plurality of opening and closing switches 13, a predetermined installation portion 11 corresponding to the position of the predetermined opening and closing switch 13 moves from the initial position toward the outside of the glass slide supply storage unit 1. Here, the identification code reader 12 moves to the position of the pressed opening and closing switch 13.

In Step S3, a predetermined slide tray 2 on which the plurality of glass slides 3 are placed is placed on the moved predetermined installation portion 11 by the operator. Although the details are not illustrated, the slide tray 2 is fixed to the installation portion 11 by a device such as a ball catch or a magnetic catch. As a result, the slide tray 2 and the installation portion 11 integrally operate.

In Step S4, when the operator presses the predetermined opening and closing switch 13 while the predetermined slide tray 2 is placed on the predetermined installation portion 11, the predetermined installation portion 11 moves from the outside of the glass slide supply storage unit 1 to the initial position. During the movement of the installation portion 11, a read operation of the identification code 4 is executed by the identification code reader 12. That is, while the plurality of glass slides 3 are moving, the identification codes 4 of the glass slides 3 are sequentially read.

As such, in the first embodiment, while the plurality of slide trays 2 are moving from the initial position in a direction toward the inside of the glass slide supply storage unit 1, a read operation of reading information regarding the identification code 4 of each of the plurality of glass slides 3 is executed by the identification code reader 12.

Although not particularly illustrated, the sample processing system 100 is electrically connected to the glass slide supply storage unit 1, the transport unit 30, and the staining unit 40, and includes a control unit that integrally controls the components. For example, the process that are executed by the respective units, for example, the movement of the moving mechanisms TM1 and TM2, the movement of the identification code reader 12, the reading of the information regarding the identification code 4, the movement of the gripper mechanism 31, and the supply of the reagent by the reagent supply portion 42 are controlled by the control unit.

Information regarding the plurality of glass slides 3 obtained by the read operation is integrated with already acquired information regarding the plurality of glass slides 3 of all the layers by the control unit. The control unit can determine the supply order of the glass slides 3, and the selected glass slide 3 moves to a transport position CP.

By priorly reading the information regarding all the glass slides 3 mounted on the supply portion 10, the glass slides 3 on the slide tray 2 can be sequentially transported, and any glass slide 3 having a high priority can be selected and transported.

In Step S5, among the plurality of slide trays 2 mounted on the supply portion 10, the slide tray 2 on which the glass slide 3 to be stained is placed is moved from the supply portion 10 by the moving mechanism TM1 such that the glass slide 3 to be stained is positioned at the transport position CP in the glass slide supply storage unit 1.

After Step S5, the glass slide 3 to be stained is transported from the transport position CP to the staining unit 40 by the transport unit 30, and the sample placed on the glass slide 3 to be stained is stained in the staining unit 40.

For example, the glass slide 3 positioned at the transport position CP is gripped by the gripper portion 32 of the gripper mechanism 31. Next, the gripped glass slide 3 is transported from the glass slide supply storage unit 1 to the staining unit 40 by the transport unit 30. Next, the gripped glass slide 3 is placed on the disk 41, and is released from the gripper portion 32. Next, the glass slide 3 is moved to the position corresponding to the reagent supply portion 42, and the sample placed on the glass slide 3 is stained with the reagent supplied from the reagent supply portion 42.

Hereinafter, a transport process of mounting the glass slide 3 for which the staining process is completed on the storage portion 20 will be described. The transport process is executed in the reversed order of Step S1 to S5 described above.

First, among the plurality of slide trays 2 (the plurality of installation portions 21) mounted on the storage portion 20, an empty slide tray 2 is moved in the Y2 direction by the moving mechanism TM2 and is moved from the storage portion 20 to a position including the transport position CP in the glass slide supply storage unit 1.

Next, the glass slide 3 on which the stained sample is placed is placed by the transport unit 30 on the slide tray 2 positioned at the transport position CP. The slide tray 2 on which the glass slide 3 is placed is moved in the Y1 direction and is moved to the storage portion 20 by the moving mechanism TM2. Here, the information regarding the identification code 4 positioned at the transport position CP is read by the identification code reader 22.

Next, when the operator presses a predetermined opening and closing switch 23 among the plurality of opening and closing switches 23, a predetermined installation portion 21 corresponding to the position of the predetermined opening and closing switch 23 moves from the initial position toward the outside of the glass slide supply storage unit 1. The operator can collect the slide tray 2 placed on the predetermined installation portion 21. Next, when the operator presses the predetermined opening and closing switch 23, the empty installation portion 21 moves from the outside of the glass slide supply storage unit 1 to the initial position.

The information regarding the glass slide 3 acquired by the identification code reader 22 is identified by the control unit, and the control unit causes a user interface such as a monitor to display the information. As a result, the operator can quickly notice the completion of the staining process.

When the operator inputs an instruction to the control unit to preferentially take out a certain glass slide 3, even before placing all the glass slides 3 on the slide tray 2, that is, even during the storage process, the designated slide tray 2 can be moved to the outside of the glass slide supply storage unit 1 such that the certain glass slide 3 can be collected.

Incidentally, the glass slide 3 on which the staining process is executed includes the reagent. Therefore, the reagent may be spilled from the glass slide 3 during the transport. Accordingly, a moving speed at which the slide tray 2 is mounted on the storage portion 20 is slower than a moving speed at which the slide tray 2 is moved from the supply portion 10.

It is preferable that the storage portion 20 is provided at a position closer to the staining unit 40 than the supply portion 10. When the supply portion 10 is provided at a position closer to the staining unit 40 than the storage portion 20, when the reagent is spilled over during the transport from the staining unit 40, not only a transport path of the moving mechanism TM2 but also a transport path of the moving mechanism TM1 are affected by the spilled reagent. When the storage portion 20 is positioned close to the staining unit 40, even when the reagent is spilled, only the moving mechanism TM2 is affected by the spilled reagent.

According to the first embodiment described above, it is possible to provide the glass slide supply storage unit 1 capable of simultaneously mounting the plurality of slide trays 2 on each of which the plurality of glass slides 3 are placed and freely transporting the desired glass slide tray 2.

### <Configuration Example of Moving Mechanisms TM1 and TM2>

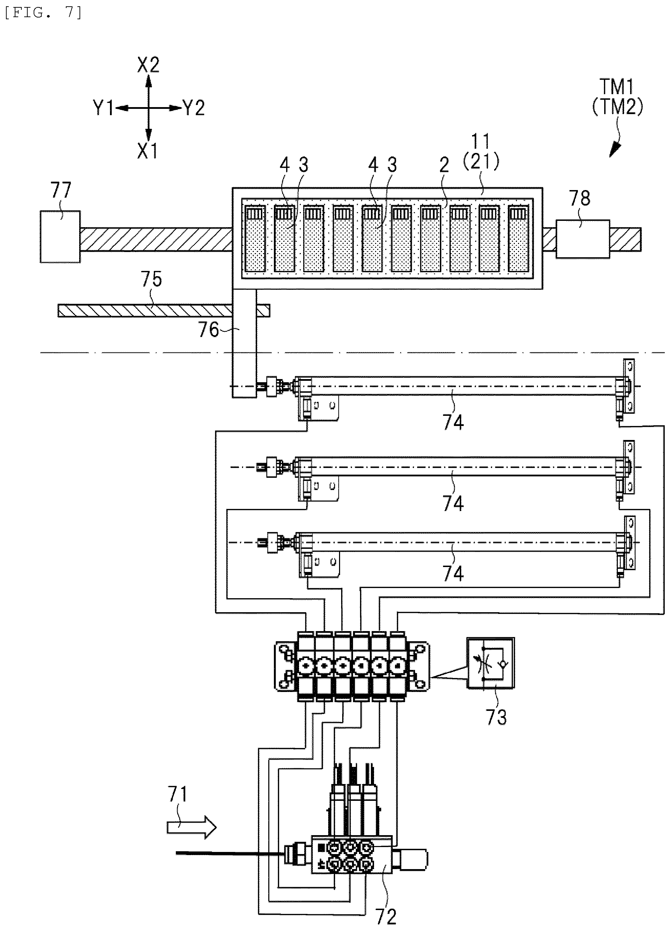

Hereinafter, a configuration example of the moving mechanisms TM1 and TM2 in the first embodiment will be described using Figs. 7 to 9.

Fig. 7 illustrates a first configuration example of the moving mechanisms TM1 and TM2. As illustrated in Fig. 7, the moving mechanisms TM1 and TM2 includes a switching valve 72, a speed controller 73, an air cylinder 74, a linear shaft 75, a linear bushing 76, an electric actuator 77, and a positioning member 78.

The linear shaft 75 is arranged parallel to the air cylinder 74 and extends in the Y direction. The linear bushing 76 is connected to the air cylinder 74, the linear shaft 75, and the installation portions 11 and 21. The electric actuator 77 is connected to the installation portions 11 and 21 and extends in the Y direction. The positioning member 78 is linked to the electric actuator 77.

Compressed air 71 is piped to the air cylinder 74 through the switching valve 72 and the speed controller 73. For example, when the compressed air 71 is supplied to a connection portion of the air cylinder 74 on the Y2 direction side under the control of the switching valve 72, the installation portions 11 and 21 are driven to the Y1 direction side along the linear shaft 75. Conversely, when the compressed air 71 is supplied to a connection portion of the air cylinder 74 on the Y1 direction side under the control of the switching valve 72, the installation portions 11 and 21 are driven to the Y2 direction side along the linear shaft 75.

By using the pulse control of the electric actuator 77 together with the driving of the air cylinder 74, positioning and speed control of the installation portions 11 and 21 are executed. The compressed air 71 in the air cylinder 74 is controlled such that the installation portions 11 and 21 move along the linear shaft 75 to be pressed against the positioning member 78. While the installation portions 11 and 21 are pressed against the positioning member 78, the electric actuator 77 is driven such that the installation portions 11 and 21 are moved.

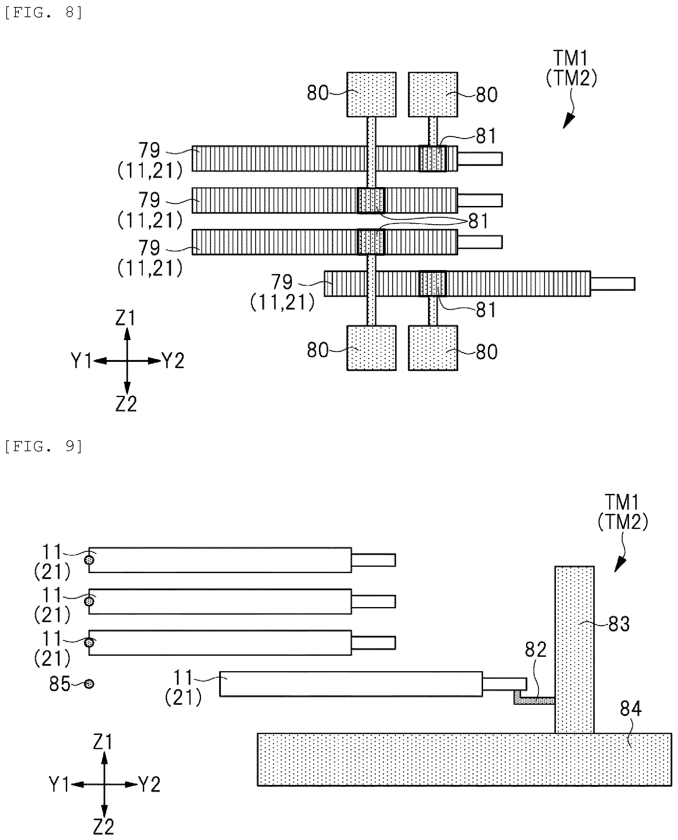

Fig. 8 illustrates a second configuration example of the moving mechanisms TM1 and TM2.

As illustrated in Fig. 8, each of the plurality of installation portions 11 and 21 has a tooth-shaped rack 79 on one side surface. The moving mechanisms TM1 and TM2 include a tooth-shaped pinion 81 that meshes with the rack 79 and a motor 80 that is connected to the pinion 81. Another side surface of each of the plurality of installation portions 11 and 21 is constrained by a linear guide to operate only in the Y direction.

When the selected predetermined glass slide 3 is supplied, the motor 80 corresponding to the predetermined layer is driven to rotate the pinion 81 such that the installation portions 11 and 21 are moved.

Fig. 9 illustrates a third configuration example of the moving mechanisms TM1 and TM2.

As illustrated in Fig. 9, the moving mechanisms TM1 and TM2 includes a pinch mechanism 82 configured to grip each of the plurality of the installation portions 11 and 21, a Z-axis actuator 83 configured to move the pinch mechanism 82 in the Z direction, and a Y-axis actuator 84 configured to move the pinch mechanism 82 in the Y direction.

Both side surfaces of each of the plurality of installation portions 11 and 21 are constrained by a linear guide to operate only in the Y direction. The plurality of installation portions 11 and 21 wait at the initial position, for example, by a waiting structure 85 such as a ball catch or a magnetic catch.

When the selected predetermined glass slide 3 is supplied, the Z-axis actuator 83 moves the pinch mechanism 82 up and down to the height of a predetermined layer. Next, the Y-axis actuator 84 moves the pinch mechanism 82 to the initial position of the predetermined installation portions 11 and 21, and the predetermined installation portions 11 and 21 are gripped by the pinch mechanism 82.

While the pinch mechanism 82 grips the predetermined installation portions 11 and 21, the pinch mechanism 82 is moved by the Y-axis actuator 84 and the Z-axis actuator 83 such that the installation portions 11 and 21 are moved.

A gripping aspect of the pinch mechanism 82 may be a method of gripping the installation portions 11 and 21 using an actuator such as a solenoid or a motor, or a method gripping the installation portions 11 and 21 using a combination of the vertical operation of the Z-axis actuator 83 and a hole-pin fitting. The gripping aspect of the pinch mechanism 82 may be another aspect.

The configuration example of the moving mechanisms TM1 and TM2 according to the first embodiment has been described above. However, the moving mechanisms TM1 and TM2 are not limited to the configuration examples of Fig. 7 to 9, and only need to be mechanisms that can individually move the slide tray 2 of the respective layers in the Y direction. For example, in another configuration example, the moving mechanisms TM1 and TM2 adopt another mechanism such as a belt-pulley mechanism or a drive mechanism using a ball screw.

### (Second Embodiment)

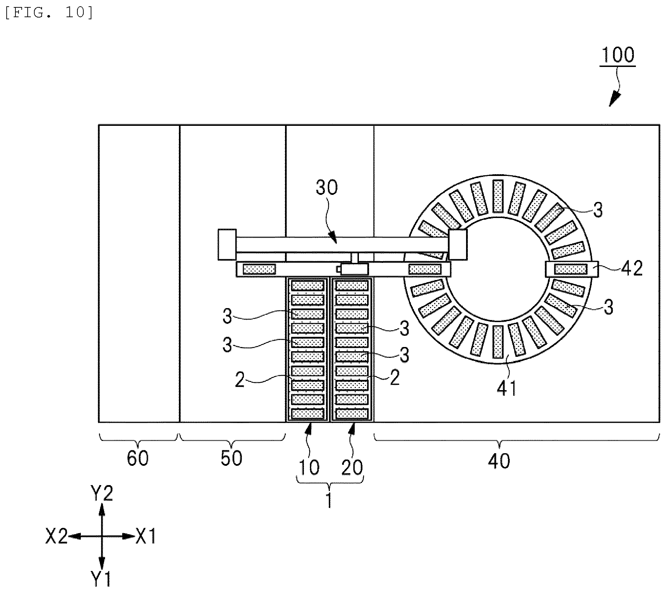

Hereinafter, a sample processing system 100 according to a second embodiment will be described using Fig. 10. In the following description, differences from the first embodiment will be mainly described, and the description of the same points as the first embodiment will not be repeated.

As illustrated in Fig. 10, the sample processing system 100 according to the second embodiment further includes a coverslipping unit 50 and an imaging unit 60 including an imaging mechanism configured to image the sample.

The glass slide 3 on which the stained sample is placed in the staining unit 40 is transported from the staining unit 40 to the coverslipping unit 50 by the transport unit 30. Next, in the coverslipping unit 50, a coverslip is placed on the glass slide 3 to cover the stained sample.

Next, when a digital image of the sample does not need to be acquired, the glass slide 3 on which the coverslip is placed is transported from the coverslipping unit 50 to the glass slide supply storage unit 1 by the transport unit 30.

When a digital image of the sample needs to be acquired, the glass slide 3 on which the coverslip is placed is transported from the coverslipping unit 50 to the imaging unit 60 by the transport unit 30. Next, the stained sample is imaged by the imaging mechanism. The imaged glass slide 3 is transported from the imaging unit 60 to the glass slide supply storage unit 1 by the transport unit 30.

As in the glass slide 3 on which the stained sample is placed, the glass slide 3 on which the coverslip is placed or the glass slide 3 where the sample is imaged is placed on the slide tray 2 positioned at the transport position CP by the transport unit 30. Next, the slide tray 2 on which the glass slide 3 is placed is moved to the storage portion 20 by the moving mechanism TM2. Here, the information regarding the identification code 4 positioned at the transport position CP is read by the identification code reader 22.

As such, according to the second embodiment, the coverslip can be placed on the glass slide 3 by the coverslipping unit 50, and the glass slide 3 on which the stained sample is placed can be imaged by the imaging unit 60. The glass slides 3 can be transported to the storage portion 20 of the glass slide supply storage unit 1.

### (Third Embodiment)

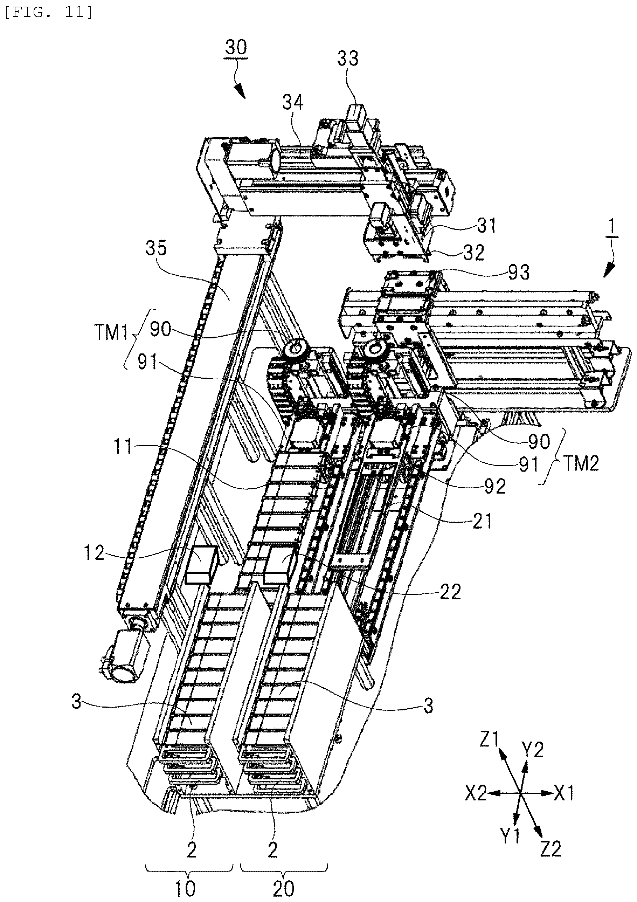

Hereinafter, a glass slide supply storage unit 1 according to a third embodiment will be described using Fig. 11. In the following description, a difference from the first embodiment will be mainly described, and the description of the same points as the first embodiment will not be repeated.

In the first embodiment, the plurality of slide trays 2 were placed on the installation portions 11 provided in the supply portion 10 and the installation portions 21 provided in the storage portion 20. In the third embodiment, the plurality of slide trays 2 are directly mounted on the supply portion 10 and the storage portion 20, the installation portion 11 is provided in the moving mechanism TM1, and the installation portion 21 is provided in the moving mechanism TM2.

That is, the moving mechanism TM1 (moving mechanism TM2) includes the installation portion 11 (installation portion 21) on which the slide tray 2 is placeable, a Y-axis driving mechanism 91 configured to mount the installation portion 11 and to move the installation portion 11 in the Y direction, and a Z-axis driving mechanism 90 configured to move the Y-axis driving mechanism 91 in the Z direction. In the installation portion 11 (installation portion 21) according to the third embodiment, a fixing mechanism 92 configured to fix the slide tray 2 to the installation portion 11 (installation portion 21) is provided.

As in the first embodiment, the identification code reader 22 is provided on the inside (Y2 direction side) of the glass slide supply storage unit 1 in the storage portion 20. However, the identification code reader 12 is also provided on the inside (Y2 direction side) of the glass slide supply storage unit 1 in the supply portion 10.

In the third embodiment, the opening and closing switches 13 and 23 are not provided in the supply portion 10 and the storage portion 20. Accordingly, the introduction of the slide tray 2 into the supply portion 10 and the collection of the slide tray 2 from the storage portion 20 are manually executed by the operator.

The predetermined slide tray 2 is introduced from the outside of the glass slide supply storage unit 1 into the initial position of the supply portion 10 by the operator, the predetermined slide tray is detected by a slide tray sensor (not illustrated), the predetermined slide tray 2 is moved from the initial position in a direction toward the inside of the glass slide supply storage unit 1 by the moving mechanism TM1, and the read operation is executed by the identification code reader 12 during the movement of the installation portion 11. The slide tray sensor is, for example, an optical or a contact known sensor. After the completion of the read operation of all the glass slides 3 placed on the predetermined slide tray 2, the predetermined slide tray 2 is moved back to the initial position by the moving mechanism TM1.

### <Transport Process of Slide Tray>

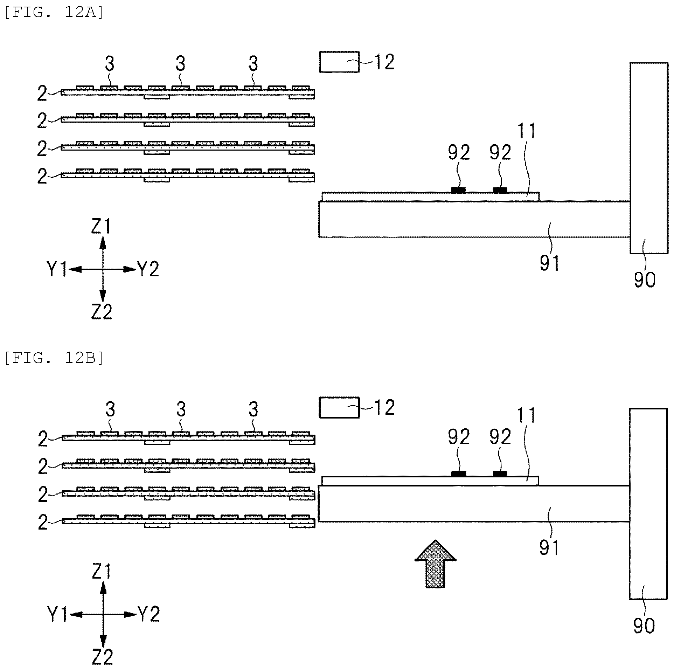

Hereinafter, a transport process of the slide tray 2 according to the third embodiment will be described using Figs. 12A to 12K.

Fig. 12A illustrates an initial state where the plurality of slide trays 2 for which the read operation is completed are mounted on the supply portion 10. First, a process in which the installation portion 11 is moved from the inside of the glass slide supply storage unit 1 in a direction toward the initial position of the supply portion 10 by the Z-axis driving mechanism 90 and the Y-axis driving mechanism 91 is executed.

As illustrated in Fig. 12B, the Y-axis driving mechanism 91 is moved in the Z1 direction and is moved to the height of the slide tray 2 of the predetermined layer by the Z-axis driving mechanism 90.

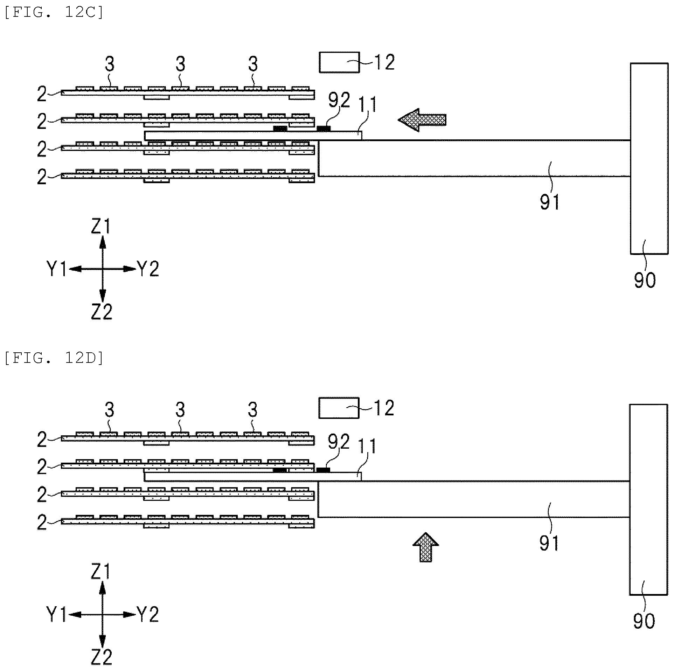

Next, as illustrated in Fig. 12C, the installation portion 11 is moved in a direction (Y1 direction) toward the outside of the glass slide supply storage unit 1 and is moved to the initial position of the supply portion 10 by the Y-axis driving mechanism 91.

Next, as illustrated in Fig. 12D, fine adjustment is executed by the Z-axis driving mechanism 90, the Y-axis driving mechanism 91 moves in the Z1 direction, and the installation portion 11 comes into contact with the predetermined slide tray 2.

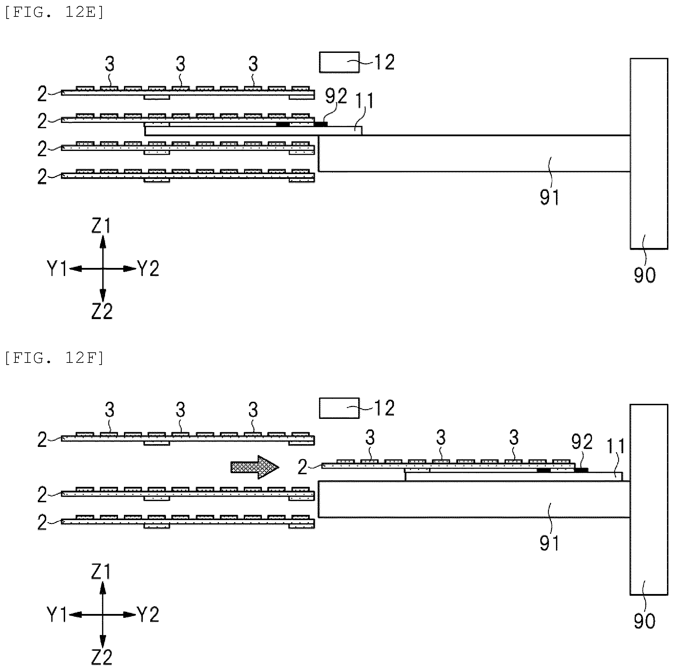

Next, as illustrated in Fig. 12E, by driving the fixing mechanism 92, the predetermined slide tray 2 is pinched by the fixing mechanism 92 and is fixed to the installation portion 11. That is, the slide tray 2 mounted on the supply portion 10 is placed on the installation portion 11 at the initial position.

Next, as illustrated in Fig. 12F, the installation portion 11 on which the slide tray 2 is placed is moved from the initial position in a direction (Y2 direction) toward the inside of the glass slide supply storage unit 1 by the Y-axis driving mechanism 91, and is moved to a position including the transport position CP.

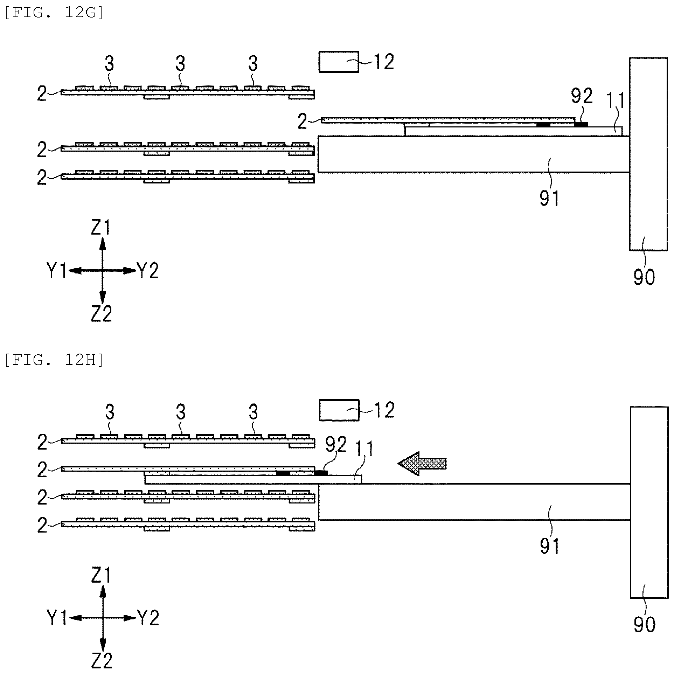

Next, as illustrated in Fig. 12G, the plurality of glass slides 3 placed on the slide tray 2 are sequentially transported to the staining unit 40 by the transport unit 30. For example, while the glass slide 3 is gripped by the gripper portion 32 of the gripper mechanism 31, the glass slide 3 moves to the staining unit 40. The gripped glass slide 3 may be placed on a transport line 93 and moved to the staining unit 40 by the transport mechanism of the transport line 93.

Next, as illustrated in Fig. 12H, the installation portion 11 is moved in a direction (Y1 direction) toward the outside of the glass slide supply storage unit 1 and is moved to the initial position of the supply portion 10 by the Y-axis driving mechanism 91.

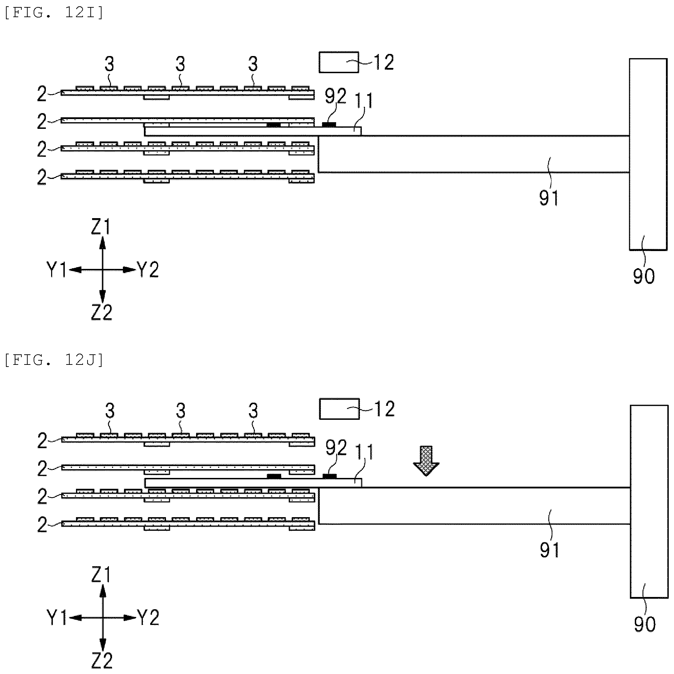

Next, as illustrated in Fig. 12I, by driving the fixing mechanism 92, the fixing between the empty slide tray 2 and the installation portion 11 is released.

Next, as illustrated in Fig. 12J, fine adjustment is executed by the Z-axis driving mechanism 90, the Y-axis driving mechanism 91 moves in the Z2 direction, and the installation portion 11 is released from the slide tray 2.

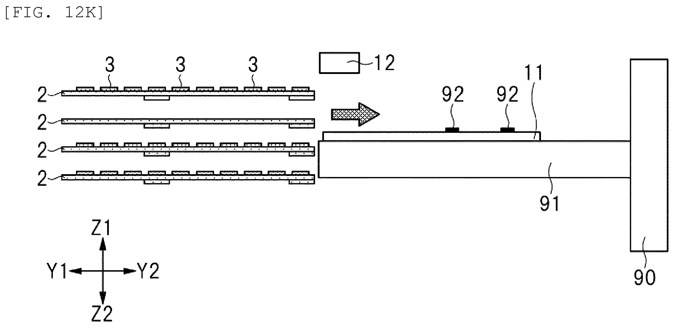

Next, as illustrated in Fig. 12K, the empty installation portion 11 is moved from the initial position in a direction (Y2 direction) toward the inside of the glass slide supply storage unit 1 by the Y-axis driving mechanism 91, and returns to the initial state of Fig. 12A.

Hereinafter, a transport process of mounting the glass slide 3 for which the staining process is completed on the storage portion 20 will be described.

First, the Y-axis driving mechanism 91 is moved in the Z1 direction and is moved to the height of the slide tray 2 of the predetermined layer by the Z-axis driving mechanism 90. Next, the installation portion 21 is moved in a direction (Y1 direction) toward the outside of the glass slide supply storage unit 1 and is moved to the initial position of the storage portion 20 by the Y-axis driving mechanism 91. Next, fine adjustment is executed by the Z-axis driving mechanism 90, the Y-axis driving mechanism 91 moves in the Z1 direction, and the installation portion 21 comes into contact with the empty slide tray 2.

Next, by driving the fixing mechanism 92, the empty slide tray 2 is pinched by the fixing mechanism 92 and is fixed to the installation portion 21. Next, the installation portion 21 on which the empty slide tray 2 is placed is moved from the initial position in a direction (Y2 direction) toward the inside of the glass slide supply storage unit 1 by the Y-axis driving mechanism 91, and is moved to a position including the transport position CP. Next, the glass slide 3 for which the staining process is completed is transported to the glass slide supply storage unit 1 by the transport unit 30, and is sequentially placed on a predetermined position of the empty slide tray 2.

Next, the installation portion 21 is moved in a direction (Y1 direction) toward the outside of the glass slide supply storage unit 1 and is moved to the initial position of the storage portion 20 by the Y-axis driving mechanism 91. During the movement of the installation portion 21, the read operation is executed by the identification code reader 12. Next, by driving the fixing mechanism 92, the fixing between the slide tray 2 and the installation portion 21 is released. Next, fine adjustment is executed by the Z-axis driving mechanism 90, the Y-axis driving mechanism 91 moves in the Z2 direction, and the installation portion 21 is released from the slide tray 2. Next, the empty installation portion 21 is moved from the initial position in a direction (Y2 direction) toward the inside of the glass slide supply storage unit 1 by the Y-axis driving mechanism 91.

As described above, according to the third embodiment, it is possible to provide the glass slide supply storage unit 1 capable of simultaneously mounting the plurality of slide trays 2 on each of which the plurality of glass slides 3 are placed and the desired glass slide tray 2 can be freely transported.

The glass slide supply storage unit 1 according to the third embodiment can also be applied to the sample processing system 100 including the coverslipping unit 50 and the imaging unit 60 as in the second embodiment.

Hereinabove, the present invention has been described in detail based on the embodiments. However, the present invention is not limited to the embodiments, and various modifications can be made within a range not departing from the scope of the present invention.

### Reference Signs List

1: glass slide supply storage unit
2: slide tray
3: glass slide
4: identification code
10: supply portion
11: installation portion
12: identification code reader
13: opening and closing switch
20: storage portion
21: installation portion
22: identification code reader
23: opening and closing switch
30: transport unit
31: gripper mechanism
32: gripper portion
33: Z transport axis
34: X transport axis
35: Y transport axis
40: staining unit
41: disk
42: reagent supply portion
50: coverslipping unit
60: imaging unit
71: compressed air
72: switching valve
73: speed controller
74: air cylinder
75: linear shaft
76: linear bushing
77: electric actuator
78: positioning member
79: rack
80: motor
81: pinion
82: pinch mechanism
83: Z-axis actuator
84: Y-axis actuator
85: waiting structure
90: Z-axis driving mechanism
91: Y-axis driving mechanism
92: fixing mechanism
93: transport line
100: sample processing system
CP: transport position
TM1, TM2: moving mechanism

## Claims

1. A glass slide supply storage unit (1) comprising:
a supply portion (10) on which a plurality of slide trays are mountable such that the plurality of slide trays are stacked in a first direction that is a vertical direction; and
a first moving mechanism (TM1) configured to individually move the plurality of slide trays mounted on the supply portion (10) in a second direction intersecting the first direction,
wherein
a plurality of glass slides (3) on each of which a sample is placed are placeable on each of the plurality of slide trays,
the glass slide supply storage unit (1) further comprises a first identification code reader (12) provided in the supply portion (10) and configured to be movable in the first direction,
an identification code (4) is provided in each of the plurality of glass slides (3), and
the first identification code reader (12) is capable of reading information in the identification code (4) of each of the plurality of glass slides (3) wherein
the first moving mechanism (TM1) is capable of moving the plurality of slide trays from an initial position in the second direction in a range corresponding to a width of at least one of the slide trays, the initial position being a position where the plurality of slide trays are mounted on the supply portion (10), and
while the plurality of slide trays are moving from the initial position in a direction toward the inside of the glass slide supply storage unit (1), a read operation of reading information of the identification code (4) of each of the plurality of glass slides (3) is executed by the first identification code reader (12).

2. The glass slide supply storage unit (1) according to claim 1, further comprising:
a plurality of first installation portions (11) that are provided in the supply portion (10) and on each of which the slide tray is placeable, wherein
the plurality of first installation portions (11) on each of which the slide tray is placed are individually moved in the second direction by the first moving mechanism (TM1) such that the plurality of slide trays are moved.

3. The glass slide supply storage unit (1) according to claim 2, wherein
the first moving mechanism (TM1) includes
an air cylinder (74),
a linear shaft (75) arranged parallel to the air cylinder (74) and extending in the second direction,
a linear bushing (76) connected to the air cylinder (74), the linear shaft (75), and the first installation portion (11),
an electric actuator (77) connected to the first installation portion (11) and extending in the second direction, and
a positioning member (78) linked to the electric actuator (77),
compressed air in the air cylinder is controlled such that the first installation portion (11) moves along the linear shaft (75) to be pressed against the positioning member (78), and
while the first installation portion (11) is pressed against the positioning member (78), the electric actuator (77) is driven such that the first installation portion (11) is moved.

4. The glass slide supply storage unit (1) according to claim 2, wherein
each of the plurality of first installation portions (11) includes a tooth-shaped rack (79),
the first moving mechanism (TM1) includes a tooth-shaped pinion (81) that meshes with the rack and a motor (80) that is connected to the pinion (81), and
the motor (80) is driven to rotate the pinion (81) such that the first installation portion (11) is moved.

5. The glass slide supply storage unit (1) according to claim 2, wherein
the first moving mechanism (TM1) includes
a pinch mechanism (82) configured to grip each of the plurality of the first installation portions,
a first actuator (83) configured to move the pinch mechanism in the first direction, and
a second actuator (84) configured to move the pinch mechanism in the second direction, and
while the first installation portion (11) is gripped by the pinch mechanism (82), the pinch mechanism (82) is moved by the first actuator (83) and the second actuator (84) such that the first installation portion (12) is moved.

6. The glass slide supply storage unit (1) according to claim 1, wherein
the first identification code reader (12) is provided inside the glass slide supply storage unit (1) in the supply portion (10), and
when a predetermined slide tray is introduced from the outside of the glass slide supply storage unit (1) into the initial position of the supply portion (10) by an operator, the predetermined slide tray is moved from the initial position in a direction toward the inside of the glass slide supply storage unit (1) by the first moving mechanism (TM1), and the read operation is executed during the movement of the predetermined slide tray.

7. The glass slide supply storage unit (1) according to claim 6, wherein
the first moving mechanism (TM1) includes
a third installation portion (11) on which the slide tray is placeable,
a second driving mechanism (91) configured to mount the third installation portion and to move the third installation portion in the second direction, and
a first driving mechanism (90) configured to move the second driving mechanism in the first direction,
the third installation portion (11) is moved from the inside of the glass slide supply storage unit (1) in a direction toward the initial position by the first driving mechanism (90) and the second driving mechanism (91),
the slide tray mounted on the supply portion (10) is placed on the third installation portion at the initial position, and
the third installation portion on which the slide tray is placed is moved from the initial position in a direction toward the inside of the glass slide supply storage unit (1) by the second driving mechanism (91).

8. A sample processing system comprising the glass slide supply storage unit (1) according to claim 1, the sample processing system further comprising:
a transport unit (30) attached to the glass slide supply storage unit (1) and configured to transport the glass slide (3); and
a staining unit (40) configured to stain the sample placed on the glass slide (3), wherein
among the plurality of slide trays mounted on the supply portion (10), a first slide tray on which a first glass slide (3) to be stained is placed is moved from the supply portion (10) by the first moving mechanism (TM1) such that the first glass slide (3) is positioned at a first transport position in the glass slide supply storage unit (1),
the first glass slide (3) is transported from the first transport position to the staining unit (40) by the transport unit (30), and
the sample placed on the first glass slide (3) is stained in the staining unit (40).

9. The sample processing system according to claim 8, wherein
the glass slide supply storage unit (1) further includes
a storage portion (20) on which the plurality of slide trays are mountable such that the plurality of slide trays are stacked in a first direction that is a vertical direction, and
a second moving mechanism (TM2) configured to individually move the plurality of slide trays mounted on the storage portion (20) in the second direction,
among the plurality of slide trays mounted on the storage portion (20), a second slide tray is moved from the storage portion (20) to a position including a second transport position in the glass slide supply storage unit (1) by the second moving mechanism (TM2),
the first glass slide (3) on which the stained sample is placed is placed by the transport unit (30) on the second slide tray positioned at the second transport position, and
the second slide tray on which the first glass slide (3) is placed is moved to the storage portion (20) by the second moving mechanism (TM2).

10. The glass slide supply storage unit (1) according to claim 1, wherein
the identification code (4) is any of a barcode, a two-dimensional code, or an RFID.

## Patentansprüche

1. Objektträgerzufuhr- und -speichereinheit (1), umfassend:
einen Zuführabschnitt (10), auf dem eine Vielzahl von Objektträgerablagen derart anbringbar sind, dass die Vielzahl von Objektträgerablagen in einer ersten Richtung, die eine vertikale Richtung ist, gestapelt sind; und
einen ersten Bewegungsmechanismus (TM1), der dazu konfiguriert ist, die auf dem Zuführabschnitt (10) angebrachte Vielzahl von Objektträgerablagen einzeln in einer zweiten Richtung zu bewegen, die die erste Richtung kreuzt,
wobei eine Vielzahl von Objektträgern (3), auf denen jeweils eine Probe platziert ist, auf jeder der Vielzahl von Objektträgerablagen platzierbar sind, die Objektträgerzufuhr- und -speichereinheit (1) ferner ein erstes Identifikationscode-Lesegerät (12) umfasst, das in dem Zuführabschnitt (10) vorgesehen und dazu konfiguriert ist, in der ersten Richtung beweglich zu sein,
ein Identifikationscode (4) in jedem der Vielzahl von Objektträgern (3) vorgesehen ist, und
das erste Identifikationscode-Lesegerät (12) dazu geeignet ist, Informationen in dem Identifikationscode (4) jedes der Vielzahl von Objektträgern (3) zu lesen, wobei
der erste Bewegungsmechanismus (TM1) dazu geeignet ist, die Vielzahl von Objektträgerablagen von einer Anfangsposition in der zweiten Richtung in einem Bereich zu bewegen, der einer Breite von mindestens einer der Objektträgerablagen entspricht, wobei die Anfangsposition eine Position ist, an der die Vielzahl von Objektträgerablagen auf dem Zuführabschnitt (10) angebracht sind, und
während sich die Vielzahl von Objektträgerablagen von der Anfangsposition in einer Richtung zum Inneren der Objektträgerzufuhr- und -speichereinheit (1) hin bewegen, ein Lesevorgang zum Lesen von Informationen des Identifikationscodes (4) jedes der Vielzahl von Objektträgern (3) durch das erste Identifikationscode-Lesegerät (12) ausgeführt wird.

2. Objektträgerzufuhr- und -speichereinheit (1) nach Anspruch 1, ferner umfassend:
eine Vielzahl von ersten Installationsabschnitten (11), die in dem Zuführabschnitt (10) vorgesehen sind und auf denen jeweils die Objektträgerablage platzierbar ist, wobei
die Vielzahl von ersten Installationsabschnitten (11), auf denen jeweils die Objektträgerablage platziert ist, einzeln in der zweiten Richtung durch den ersten Bewegungsmechanismus (TM1) bewegt werden, so dass die Vielzahl von Objektträgerablagen bewegt wird.

3. Objektträgerzufuhr- und -speichereinheit (1) nach Anspruch 2, wobei der erste Bewegungsmechanismus (TM1) umfasst:
einen Luftzylinder (74),
eine Linearwelle (75), die parallel zu dem Luftzylinder (74) angeordnet ist und sich in der zweiten Richtung erstreckt,
eine Linearbuchse (76), die mit dem Luftzylinder (74), der Linearwelle (75) und dem ersten Installationsabschnitt (11) verbunden ist,
einen elektrischen Aktuator (77), der mit dem ersten Installationsabschnitt (11) verbunden ist und sich in der zweiten Richtung erstreckt, und
ein Positionierelement (78), das mit dem elektrischen Aktuator (77) verbunden ist,
wobei Druckluft in dem Luftzylinder derart gesteuert wird, dass sich der erste Installationsabschnitt (11) entlang der Linearwelle (75) bewegt, um gegen das Positionierelement (78) gedrückt zu werden, und während der erste Installationsabschnitt (11) gegen das Positionierelement (78) gedrückt wird, der elektrische Aktuator (77) angetrieben wird, so dass der erste Installationsabschnitt (11) bewegt wird.

4. Objektträgerzufuhr- und -speichereinheit (1) nach Anspruch 2, wobei
jeder der Vielzahl von ersten Installationsabschnitten (11) eine zahnförmige Zahnstange (79) umfasst,
der erste Bewegungsmechanismus (TM1) ein zahnförmiges Ritzel (81), das mit der Zahnstange kämmt, und einen Motor (80), der mit dem Ritzel (81) verbunden ist, umfasst, und
der Motor (80) angetrieben wird, um das Ritzel (81) zu drehen, so dass der erste Installationsabschnitt (11) bewegt wird.

5. Objektträgerzufuhr- und -speichereinheit (1) nach Anspruch 2, wobei
der erste Bewegungsmechanismus (TM1) umfasst:
einen Klemmechanismus (82), der dazu konfiguriert ist, jeden der Vielzahl der ersten Installationsabschnitte zu greifen, einen ersten Aktuator (83), der dazu konfiguriert ist, den Klemmechanismus in der ersten Richtung zu bewegen, und einen zweiten Aktuator (84), der dazu konfiguriert ist, den Klemmechanismus in der zweiten Richtung zu bewegen, und
während der erste Installationsabschnitt (11) durch den Klemmechanismus (82) gegriffen wird, der Klemmechanismus (82) durch den ersten Aktuator (83) und den zweiten Aktuator (84) bewegt wird, so dass der erste Installationsabschnitt (11) bewegt wird.

6. Objektträgerzufuhr- und -speichereinheit (1) nach Anspruch 1, wobei
das erste Identifikationscode-Lesegerät (12) innerhalb der Objektträgerzufuhr- und -speichereinheit (1) in dem Zuführabschnitt (10) vorgesehen ist, und
wenn eine vorbestimmte Objektträgerablage von außerhalb der Objektträgerzufuhr- und -speichereinheit (1) in die Anfangsposition des Zuführabschnitts (10) durch einen Bediener eingeführt wird, die vorbestimmte Objektträgerablage von der Anfangsposition in einer Richtung zum Inneren der Objektträgerzufuhr- und -speichereinheit (1) hin durch den ersten Bewegungsmechanismus (TM1) bewegt wird, und der Lesevorgang während der Bewegung der vorbestimmten Objektträgerablage ausgeführt wird.

7. Objektträgerzufuhr- und -speichereinheit (1) nach Anspruch 6, wobei
der erste Bewegungsmechanismus (TM1) umfasst:
einen dritten Installationsabschnitt (11), auf dem die Objektträgerablage platzierbar ist,
einen zweiten Antriebsmechanismus (91), der dazu konfiguriert ist, den dritten Installationsabschnitt zu montieren und den dritten Installationsabschnitt in der zweiten Richtung zu bewegen, und
einen ersten Antriebsmechanismus (90), der dazu konfiguriert ist, den zweiten Antriebsmechanismus in der ersten Richtung zu bewegen,
wobei der dritte Installationsabschnitt (11) vom Inneren der Objektträgerzufuhr- und -speichereinheit (1) in einer Richtung zur Anfangsposition hin durch den ersten Antriebsmechanismus (90) und den zweiten Antriebsmechanismus (91) bewegt wird,
die auf dem Zuführabschnitt (10) angebrachte Objektträgerablage auf dem dritten Installationsabschnitt an der Anfangsposition platziert wird, und der dritte Installationsabschnitt, auf dem die Objektträgerablage platziert ist, von der Anfangsposition in einer Richtung zum Inneren der Objektträgerzufuhr- und -speichereinheit (1) hin durch den zweiten Antriebsmechanismus (91) bewegt wird.

8. Probenverarbeitungssystem, umfassend die Objektträgerzufuhr- und - speichereinheit (1) nach Anspruch 1, wobei das Probenverarbeitungssystem ferner umfasst:
eine Transporteinheit (30), die an der Objektträgerzufuhr- und - speichereinheit (1) angebracht und dazu konfiguriert ist, den Objektträger (3) zu transportieren; und
eine Färbeeinheit (40), die dazu konfiguriert ist, die auf dem Objektträger (3) platzierte Probe zu färben, wobei
unter der auf dem Zuführabschnitt (10) angebrachten Vielzahl von Objektträgerablagen eine erste Objektträgerablage, auf der ein erster zu färbender Objektträger (3) platziert ist, vom Zuführabschnitt (10) durch den ersten Bewegungsmechanismus (TM1) bewegt wird, so dass der erste Objektträger (3) an einer ersten Transportposition in der Objektträgerzufuhr- und -speichereinheit (1) positioniert wird,
der erste Objektträger (3) von der ersten Transportposition zur Färbeeinheit (40) durch die Transporteinheit (30) transportiert wird, und
die auf dem ersten Objektträger (3) platzierte Probe in der Färbeeinheit (40) gefärbt wird.

9. Probenverarbeitungssystem nach Anspruch 8, wobei die Objektträgerzufuhr- und -speichereinheit (1) ferner umfasst:
einen Speicherabschnitt (20), auf dem die Vielzahl von Objektträgerablagen derart anbringbar sind, dass die Vielzahl von Objektträgerablagen in einer ersten Richtung, die eine vertikale Richtung ist, gestapelt sind, und
einen zweiten Bewegungsmechanismus (TM2), der dazu konfiguriert ist, die auf dem Speicherabschnitt (20) angebrachte Vielzahl von Objektträgerablagen einzeln in der zweiten Richtung zu bewegen,
wobei unter der auf dem Speicherabschnitt (20) angebrachten Vielzahl von Objektträgerablagen eine zweite Objektträgerablage vom Speicherabschnitt (20) zu einer Position, die eine zweite Transportposition in der Objektträgerzufuhr- und -speichereinheit (1) einschließt, durch den zweiten Bewegungsmechanismus (TM2) bewegt wird,
der erste Objektträger (3), auf dem die gefärbte Probe platziert ist, durch die Transporteinheit (30) auf der zweiten Objektträgerablage, die an der zweiten Transportposition positioniert ist, platziert wird, und
die zweite Objektträgerablage, auf der der erste Objektträger (3) platziert ist, zum Speicherabschnitt (20) durch den zweiten Bewegungsmechanismus (TM2) bewegt wird.

10. Objektträgerzufuhr- und -speichereinheit (1) nach Anspruch 1, wobei der Identifikationscode (4) ein Strichcode, ein zweidimensionaler Code oder ein RFID ist.

## Revendications

1. Unité (1) d'alimentation et de stockage de lamelles de verre comprenant :
une partie (10) d'alimentation sur laquelle une pluralité de plateaux pour lamelles peuvent être montés de telle façon que la pluralité de plateaux pour lamelles sont empilés dans un premier sens qui est un sens vertical ; et
un premier mécanisme (TM1) de déplacement configuré pour déplacer individuellement la pluralité de plateaux pour lamelles montés sur la partie (10) d'alimentation dans un deuxième sens croisant le premier sens, dans laquelle
une pluralité de lamelles (3) de verre sur chacune desquelles un échantillon est placé peuvent être placées sur chacun de la pluralité de plateaux pour lamelles,
l'unité (1) d'alimentation et de stockage de lamelles de verre comprend en outre un premier lecteur (12) de code d'identification prévu dans la partie (10) d'alimentation et configuré pour être mobile dans le premier sens,
un code (4) d'identification est prévu dans chacune de la pluralité de lamelles (3) de verre, et
le premier lecteur (12) de code d'identification est apte à lire des informations dans le code (4) d'identification de chacune de la pluralité de lamelles (3) de verre, dans laquelle
le premier mécanisme (TM1) de déplacement est apte à déplacer la pluralité de plateaux pour lamelles depuis une position initiale dans le deuxième sens dans une plage correspondant à une largeur d'au moins un des plateaux pour lamelles, la position initiale étant une position où la pluralité de plateaux pour lamelles sont montés sur la partie (10) d'alimentation, et
tandis que la pluralité de plateaux pour lamelles se déplacent depuis la position initiale dans un sens vers l'intérieur de l'unité (1) d'alimentation et de stockage de lamelles de verre, une opération de lecture pour lire des informations du code (4) d'identification de chacune de la pluralité de lamelles (3) de verre est exécutée par le premier lecteur (12) de code d'identification.

2. Unité (1) d'alimentation et de stockage de lamelles de verre selon la revendication 1, comprenant en outre :
une pluralité de premières parties (11) d'installation qui sont prévues dans la partie (10) d'alimentation et sur chacune desquelles le plateau pour lamelles peut être placé, dans laquelle
la pluralité de premières parties (11) d'installation sur chacune desquelles le plateau pour lamelles est placé sont individuellement déplacées dans le deuxième sens par le premier mécanisme (TM1) de déplacement de telle façon que la pluralité de plateaux pour lamelles sont déplacés.

3. Unité (1) d'alimentation et de stockage de lamelles de verre selon la revendication 2, dans laquelle
le premier mécanisme (TM1) de déplacement inclut
un cylindre pneumatique (74),
un arbre linéaire (75) agencé parallèle au cylindre pneumatique (74) et s'étendant dans le deuxième sens,
un raccord linéaire (76) connecté au cylindre pneumatique (74), à l'arbre linéaire (75), et à la première partie (11) d'installation,
un actionneur électrique (77) connecté à la première partie (11) d'installation et s'étendant dans le deuxième sens, et
un élément (78) de positionnement lié à l'actionneur électrique (77),
l'air comprimé dans le cylindre pneumatique est commandé de telle façon que la première partie (11) d'installation se déplace le long de l'arbre linéaire (75) pour être pressé contre l'élément (78) de positionnement, et
tandis que la première partie (11) d'installation est pressé contre l'élément (78) de positionnement, l'actionneur électrique (77) est entraîné de telle façon que la première partie (11) d'installation est déplacée.

4. Unité (1) d'alimentation et de stockage de lamelles de verre selon la revendication 2, dans laquelle
chacune de la pluralité de premières parties (11) d'installation inclut une crémaillère (79) en forme de dents,
le premier mécanisme (TM1) de déplacement inclut un pignon (81) en forme de dents qui s'engrène avec la crémaillère et un moteur (80) qui est connecté au pignon (81), et
le moteur est entraîné pour faire tourner le pignon (81) de telle façon que la première partie (11) d'installation est déplacée.

5. Unité (1) d'alimentation et de stockage de lamelles de verre selon la revendication 2, dans laquelle
le premier mécanisme (TM1) de déplacement inclut
un mécanisme (82) de pincement configuré pour saisir chacune de la pluralité de premières parties d'installation,
un premier actionneur (83) configuré pour déplacer le mécanisme de pincement dans le premier sens, et
un deuxième actionneur (84) configuré pour déplacer le mécanisme de pincement dans le deuxième sens, et
tandis que la première partie (11) d'installation est saisie par le mécanisme (82) de pincement, le mécanisme (82) de pincement est déplacé par le premier actionneur (83) et le deuxième actionneur (84) de telle façon que la première partie (11) d'installation est déplacée.

6. Unité (1) d'alimentation et de stockage de lamelles de verre selon la revendication 1, dans laquelle
le premier lecteur (12) de code d'identification est prévu à l'intérieur de l'unité (1) d'alimentation et de stockage de lamelles de verre dans la partie (10) d'alimentation, et
lorsqu'un plateau pour lamelles prédéterminé est introduit depuis l'extérieur de l'unité (1) d'alimentation et de stockage de lamelles de verre dans la position initiale de la partie (10) d'alimentation par un opérateur, le plateau pour lamelles prédéterminé est déplacé depuis la position initiale dans un sens vers l'intérieur de l'unité (1) d'alimentation et de stockage de lamelles de verre par le premier mécanisme (TM1) de déplacement, et l'opération de lecture est exécutée lors du mouvement du plateau pour lamelles prédéterminé.

7. Unité (1) d'alimentation et de stockage de lamelles de verre selon la revendication 6, dans laquelle
le premier mécanisme (TM1) de déplacement inclut
une troisième partie (11) d'installation sur laquelle le plateau pour lamelles peut être placé,
un deuxième mécanisme (91) d'entraînement configuré pour monter la troisième partie d'installation et pour déplacer la troisième partie d'installation dans le deuxième sens, et
un premier mécanisme (90) d'entraînement configuré pour déplacer le deuxième mécanisme d'entraînement dans le premier sens,
la troisième partie (11) d'installation est déplacée depuis l'intérieur de l'unité (1) d'alimentation et de stockage de lamelles de verre dans un sens vers la position initiale par le premier mécanisme (90) d'entraînement et le deuxième mécanisme (91) d'entraînement,
le plateau pour lamelles monté sur la partie (10) d'alimentation est placé sur la troisième partie d'installation à la position initiale, et
la troisième partie d'installation sur laquelle le plateau pour lamelles est placé est déplacée depuis la position initiale dans un sens vers l'intérieur de l'unité (1) d'alimentation et de stockage de lamelles de verre par le deuxième mécanisme (91) d'entraînement.

8. Système de traitement d'échantillons comprenant l'unité (1) d'alimentation et de stockage de lamelles de verre selon la revendication 1, le système de traitement d'échantillons comprenant en outre :
une unité (30) de transport fixée à l'unité (1) d'alimentation et de stockage de lamelles de verre et configurée pour transporter la lamelle (3) de verre ; et
une unité (40) de coloration configurée pour colorer l'échantillon placé sur la lamelle (3) de verre, dans lequel
parmi la pluralité de plateaux pour lamelles montés sur la partie (10) d'alimentation, un premier plateau pour lamelles sur lequel une première lamelle (3) de verre devant être colorée est placée est déplacé depuis la partie (10) d'alimentation par le premier mécanisme (TM1) de déplacement de telle façon que la première lamelle (3) de verre est positionnée en une première position de transport dans l'unité (1) d'alimentation et de stockage de lamelles de verre,
la première lamelle (3) de verre est transportée depuis la première position de transport jusqu'à l'unité (40) de coloration par l'unité (30) de transport, et
l'échantillon placé sur la première lamelle (3) de verre est coloré dans l'unité (40) de coloration.

9. Système de traitement d'échantillons selon la revendication 8, dans lequel
l'unité (1) d'alimentation et de stockage de lamelles de verre inclut en outre
une partie (20) de stockage sur laquelle la pluralité de plateaux pour lamelles peuvent être montés de telle façon que la pluralité de plateaux pour lamelles sont empilés dans un premier sens qui est un sens vertical, et
un deuxième mécanisme (TM2) de déplacement configuré pour déplacer individuellement la pluralité de plateaux pour lamelles montés sur la partie (20) de stockage dans le deuxième sens,
parmi la pluralité de plateaux pour lamelles montés sur la partie (20) de stockage, un deuxième plateau pour lamelles est déplacé depuis la partie (20) de stockage jusqu'à une position incluant une deuxième position de transport dans l'unité (1) d'alimentation et de stockage de lamelles de verre par le deuxième mécanisme (TM2) de déplacement,
la première lamelle (3) de verre sur laquelle l'échantillon coloré est placé est placée par l'unité (30) de transport sur le deuxième plateau pour lamelles positionné à la deuxième position de transport, et
le deuxième plateau pour lamelles sur lequel la première lamelle (3) de verre est placée est déplacé jusqu'à la partie (20) de stockage par le deuxième mécanisme (TM2) de déplacement.

10. Unité (1) d'alimentation et de stockage de lamelles de verre selon la revendication 1, dans laquelle
le code (4) d'identification est l'un quelconque parmi un code à barres, un code bidimensionnel, ou une RFID.
